# EUROPEAN PATENT SPECIFICATION

(11) **EP 2 811 220 B1**
(45) Date of publication and mention of the grant of the patent: **15.11.2017**
(21) Application number: 13743952.7
(22) Date of filing: 31.01.2013
(51) Int. Cl.: F21S 10/00, H05B 37/02, A63J 17/00, G06F 17/00

(54) **ASSOCIATION OF LIGHTING EFFECTS WITH DISCRETE FREQUENCY SIGNALS EXTRACTED FROM AUDIO SIGNALS**
ASSOZIATION VON LICHTEFFEKTEN MIT EINZELNEN AUS AUDIOSIGNALEN EXTRAHIERTEN FREQUENZSIGNALEN
ASSOCIATION D'EFFETS DE LUMIÈRE À DES SIGNAUX FRÉQUENTIELS DISCRETS EXTRAITS DE SIGNAUX SONORES

(30) Priority: 02.02.2012 ES 201200108
(43) Date of publication of application: 10.12.2014
(73) Proprietor: Iborra Badia, Gerardo, 46410 Sueca (Valencia) (ES)
(72) Inventor: Iborra Badia, Gerardo, 46410 Sueca (Valencia) (ES)
(74) Representative: Pons
(86) International application number: PCT/ES2013/000025
(87) International publication number: WO 2013/113958

(56) References cited:
- WO-A1-01/99475
- WO-A1-01/99475
- BE-A3- 1 013 875
- CN-A- 101 416 562
- DE-A1- 19 611 257
- ES-U- 1 064 353
- GB-A- 2 258 525
- GB-A- 2 258 525
- JP-A- 2002 299 080

## Description

### Field of the art

The invention falls within the music event lighting industry. The invention encompasses music events where there is lighting used as a lighting effect associated with the rhythm of the music being played at the event.

### State of the art

In the current state of the art, lighting effects at music events are managed manually. At present, the lighting effects operator manually changes the lighting effects in accordance with the changes in the rhythm of the music being played. Therefore, it is the operator who is in charge of adapting the rhythm of the lighting effects to the rhythm of the music being played at the musical event.

However, recently appears a systems that makes possible to associate illuminate effects with signals from an audio signal as is known form the document WO01/99475A1, This document describes methods and apparatus for executing a lighting program to control a plurality of light emitting diodes (LEDs) in response to at least one characteristics of an audio input. In particular, this method comprising acts of: receiving an audio input in digital form; digitally processing the audio input to determine at least one characteristic of the audio input; executing the lighting program to generate control signals to control the plurality of LEDs; and during execution of the lighting program generating at least one of the control signals based at least in part on the at least one characteristic of the audio input.

Additionally, is known, from the document GB2258525A, a light display apparatus that comprises a three-dimensional array of identical circular lamps supported by lamp holders. The lamps are operable between on and off positions and between various brightness levels intermediate said on and off positions in response to changes in musical volume and/or musical frequency. The audible portion of a musical arrangement will be transmitted from the musical source in the form of an analog signal, which signal amplitude or frequency can take any value within a wide range of values.

### Explanation of the invention

The present invention relates to a method for controlling lighting at music events. This control method acts on lights in real time, reacting automatically to the temporal evolution of the audio signal.

The present invention aims to automatically associate the rhythm of the lighting effects with the rhythm of the music. Consequently, the lighting effects operator does not have to follow the changes in the rhythm of the music to change the lighting pattern of the lighting effects, but rather the system presented in this invention is in charge of automatically associating the rhythm of the lighting with the rhythm of the music. The present invention provides a method according to claim 1. To this end, the audio signal is analysed in order to extract the frequency components therefrom. Once the frequency components have been extracted, they can then be associated with the lighting effects. Consequently, by associating the different lighting elements with the different frequency components extracted, the lighting effects can be made to follow the rhythm set by the temporal evolution of the frequency components with which they have been associated.

This invention implements a first stage wherein the audio signal being reproduced is captured in order to convert it into the digital domain.

In a subsequent stage, an algorithm is applied to this discretized audio signal in order to process the signal and break it down into its frequency components.

In the next stage, a graphical interface is implemented to enable the user to interact with the system. The frequency decomposition performed in the previous stage is graphically represented on the interface. Additionally, the lighting elements in the music event venue are also represented on the graphical interface. Therefore, through this graphical interface, the user is capable of associating a lighting element to a decomposed frequency. In this manner, luminous intensity depends on the amplitude of the frequency with which it has been associated.

In a subsequent stage, the value of the amplitude of the decomposed frequency is sent to the output of the lighting element with which it has been associated so that its luminous intensity is equivalent to the amplitude of the decomposed frequency.

### Detailed explanation of an embodiment

The invention has been embodied using a computerised system, colloquially known as a computer. Specifically, the development platform used has a standard computer topology formed by a motherboard containing a microprocessor, RAM, sound card, hard drive and peripherals (keyboard, mouse and monitor).

These characteristics are not fixed, allowing the use of other platforms to achieve the functionality of the invention.

The audio signal is acquired via the computer's sound card audio input.

Once the audio signal has been acquired, the signal is sent to a program that digitally processes said signal, frequentially decomposing it. In order to perform the frequency decomposition, a variant of the Fourier Transform algorithm called Fast Fourier Transform (FFT) must be implemented.

After extracting the frequency information, the signal is sent to the graphical interface, where it is displayed by means of vertical bars representing the amplitude of each of the discrete frequencies which have been decomposed. In this manner, the user can observe the temporal evolution of the frequencies extracted from the sound signal.

Another characteristic of the graphical interface is the presence of graphic icons representing the lighting elements physically present at the venue where the music is being played. These graphic icons present in the graphic interface may be moved around by the user of the system and placed under the vertical bars. In this manner, the frequency represented in the vertical bar is associated with the icon placed underneath it and, consequently, with the lighting element represented by the icon.

Once a lighting element is associated with a frequency, the value of the amplitude of the frequency is sent to the output assigned to this lighting element in an Input and Output (I/O) card connected to the PCI bus of the computer's motherboard.

The output of this I/O card is connected to a circuit (DIMMER) that controls the luminous intensity of the lighting element. The purpose of these circuits is to allow the lighting elements to light up with more or less luminous intensity, in accordance with the value sent from the output of the I/O card.

## Claims

1. Method for associating lighting effects with discrete frequency signals extracted from an audio signal, at music events wherein there is lighting with lighting elements that are associated with lighting effects according to the audio signal, the method comprising the following stages:
- a first stage wherein the audio signal is captured,
- a second stage wherein the audio signal is processed,
- a third stage wherein a graphical interface is implemented in order to display on a display graphic icons representing the lighting elements, and to enable a user to interact by associating a lighting element to a lighting effect, wherein the method is **characterised in that**:
- the second stage comprising processes the audio signal, captured in the first stage, in order to decompose it and extract discrete frequency signals,
- the third stage comprises displaying a temporal evolution of the discrete frequency signals, processed in the second stage, are displayed in order to graphically enable the user to associate, or disassociate, the graphic icons with the corresponding lighting element and with a discrete frequency signal by placing on the display a graphic icon underneath the corresponding discrete frequency signal, and **in that** the method further comprises
- a fourth stage wherein a value of the amplitude of the discrete frequency signals is sent to at least one lighting element with which it has been associated so that its degree of illumination is equivalent to its amplitude.

2. Method for associating lighting effects with discrete frequency signals extracted from an audio signal, according to claim 1, **characterised in that** the decomposition into discrete frequency signals is performed using a digital algorithm that extracts the value of the discrete frequency signals present in the audio signal acquired.

3. Method for associating lighting effects with discrete frequency signals extracted from an audio signal, according to claim 1, **characterised in that** the fourth stage comprises a sub stage wherein the value of the amplitude of the discrete frequency signal is converted into an equivalent illumination value.

## Patentansprüche

1. Verfahren zum Assoziieren von aus einem Audiosignal extrahierten Lichteffekten mit diskreten Frequenzsignalen bei Musikveranstaltungen, wobei es Beleuchtung mit Beleuchtungselementen gibt, welche mit Lichteffekten gemäß dem Audiosignal assoziiert sind, wobei das Verfahren die folgenden Stufen umfasst:
- eine erste Stufe, wobei das Audiosignal erfasst wird,
- eine zweite Stufe, wobei das Audiosignal verarbeitet wird,
- eine dritte Stufe, wobei eine grafische Schnittstelle implementiert wird,
um grafische Symbole, welche die Beleuchtungselemente repräsentieren, auf einem Anzeigefeld anzuzeigen, und es einem Benutzer zu ermöglichen, durch Zuordnen eines Beleuchtungselements zu einem Beleuchtungseffekt, zu interagieren, wobei das Verfahren **dadurch gekennzeichnet ist, dass**
- die zweite Stufe das in der ersten Stufe das Erfassen des Audiosignals umfasst, um es zu zerlegen und diskrete Frequenzsignale zu extrahieren,
- die dritte Stufe das Anzeigen einer temporären Entwicklung der diskreten Frequenzsignale, die in der zweiten Stufe verarbeitet wurden, um es dem Benutzer grafisch zu ermöglichen, grafische Symbole mit dem entsprechenden Lichtelement und einem diskreten Frequenzsignal zu assoziieren oder zu trennen, indem ein grafisches Symbol auf dem Anzeigefeld unter dem entsprechenden diskreten Frequenzsignal angeordnet wird, und dadurch, dass das Verfahren ferner
- eine vierte Stufe umfasst, wobei ein Amplitudenwert der diskreten Frequenzsignale mindestens an ein Beleuchtungselement gesendet wird, mit dem es assoziiert wurde, sodass der Grad der Beleuchtung seiner Amplitude entspricht.

2. Verfahren zum Assoziieren von aus einem Audiosignal extrahierten Lichteffekten mit diskreten Frequenzsignalen nach Anspruch 1, **dadurch gekennzeichnet, dass** die Zerlegung in diskrete Frequenzsignale mithilfe eines digitalen Algorithmus durchgeführt wird, der den Wert der diskreten Frequenzsignale, welche in dem erhaltenen Audiosignal vorhanden sind, extrahiert.

3. Verfahren zum Assoziieren von aus einem Audiosignal extrahierten Lichteffekten mit diskreten Frequenzsignalen nach Anspruch 1, **dadurch gekennzeichnet, dass** die vierte Stufe eine Teilstufe umfasst, wobei der Amplitudenwert des diskreten Frequenzsignals in einen entsprechenden Beleuchtungswert umgewandelt wird.

## Revendications

1. Procédé d'association d'effets d'éclairage à des signaux de fréquence discrets extraits d'un signal audio, à des évènements musicaux dans lesquels il y a un éclairage avec des éléments d'éclairage qui sont associés aux effets d'éclairage selon le signal audio, le procédé comprenant les étapes suivantes :
- une première étape dans laquelle le signal audio est capturé,
- une deuxième étape dans laquelle le signal audio est traité,
- une troisième étape dans laquelle une interface graphique est mise en oeuvre afin d'afficher sur des icônes graphiques d'affichage représentant les éléments d'éclairage, et pour permettre à un utilisateur d'interagir en associant un élément d'éclairage à un effet d'éclairage,
dans lequel le procédé est **caractérisé en ce que** :
- la deuxième étape comprenant le traitement du signal audio, capturé dans la première étape, afin de le décomposer et d'extraire les signaux de fréquence discrets,
- la troisième étape comprend l'affichage d'une évolution temporaire des signaux de fréquence discrets, traités dans la deuxième étape, sont affichés afin de permettre graphiquement à l'utilisateur d'associer, ou de dissocier, les icônes graphiques à l'élément d'éclairage correspondant et à un signal de fréquence discret en plaçant sur l'affichage une icône graphique sous le signal de fréquence discret correspondant,
et **en ce que** le procédé comprend en outre
- une quatrième étape dans laquelle une valeur de l'amplitude des signaux de fréquence discrets est envoyée à au moins un élément d'éclairage auquel elle a été associée de façon à ce que son degré d'illumination est équivalent à son amplitude.

2. Procédé d'association d'effets d'éclairage à des signaux de fréquence discrets extraits d'un signal audio, selon la revendication 1, **caractérisé en ce que** la décomposition en signaux de fréquence discrets est réalisée en utilisant un algorithme numérique qui extrait la valeur des signaux de fréquence discrets présents dans le signal audio acquis.

3. Procédé d'association d'effets d'éclairage à des signaux de fréquence discrets extraits d'un signal audio, selon la revendication 1, **caractérisé en ce que** la quatrième étape comprend une phase dans laquelle la valeur de l'amplitude du signal de fréquence discret est convertie en une valeur d'illumination équivalente.
